# EUROPEAN PATENT APPLICATION

(11) **EP 0 889 276 A1**
(43) Date of publication of application: **07.01.1999**
(21) Application number: 98108088.0
(22) Date of filing: 04.05.1998
(51) Int. Cl.: F16L 58/18, F16L 58/10

(54) **Resin coated pipe and manufacturing method thereof, and a fuel tank with such a pipe**

(30) Priority: 03.07.1997 JP 178609/97
(71) Applicant: Hit Kougyo Kabushiki Kaisha, Iwata-Gun, Shizuoka-Ken (JP)
(72) Inventor: Hirano, Jun, Iwata-Shi, Shizuoka-Ken (JP)
(74) Representative: Klunker . Schmitt-Nilson . Hirsch

(57) **Abstract**

A resin coated pipe, wherein a peripheral surface near an end portion of a pipe material (6) is masked over a specified length, and a resin coating layer (7) is formed on a remaining portion of a surface of the pipe material (6), wherein the masked portion is made to be an insertion portion (8) to be inserted tightly into an inside diameter portion of a fitting member (4). The end portion of the resin coating layer is melted, to form a resin connecting portion (18) extending along the insertion portion (8) which is capable of being fitted into an inside diameter portion of the fitting member (4) together with the insertion portion (8).

## Description

### BACKGROUND OF THE INVENTION

The present invention relates to a resin coating pipe mostly used in a fuel filler pipe of an automobile or the like, and a manufacturing method thereof.

Fig. 3 is an perspective view showing a fuel tank and a fuel filler pipe of an automobile. The fuel tank 1 is located at a lower portion of a body of an automobile, and the fuel filler pipe 2 is installed so as to connect the fuel feed portion 3 provided at the body outside plate and the fuel tank 1. In the course of the fuel filler pipe 2, an elastic pipe 4 formed from an elastic material such as a rubber is connected, and by the elasticity of this elastic pipe 4, the error (difference) in the relative position of the fuel feed portion 3 and the fuel tank 1 or the vibration are arranged to be absorbed.

As a material of the fuel filler pipe 2, a material which is excellent in corrosion resistance such as a stainless pipe is preferable, but a stainless pipe is expensive and further, it is scarce of processability such as bending workability, and therefore, commonly, a pipe material made by performing surface treatment such as plating or cationic electro-deposition coating onto the surface of a steel pipe which is cheap and has a good workability, is used as a material of the fuel filler pipe 2. The steel pipe material like this is used such that after it has been subjected to bending processing or the like, a resin coating layer such as a layer of polyethylene is further formed on the surface thereof, and it is made to be a resin coating pipe so that the corrosion resistance thereof may greatly be raised.

As a forming method of a resin coating layer in a resin coating pipe like this, for example, there is such a method that after electro-statically attaching a powdered resin material onto the surface of a pipe material, the pipe material is heated so that the resin material may be melted to form the resin coating layer, or there is such a method that a powdered resin material is sprinkled and attached to a previously heated pipe material, and after that, further, the pipe material is heated to form a resin coating layer.

However, in any above mentioned method, the thickness of the resin coating film is thick (not less than 0.3 mm), and if this thick resin coating layer is applied even to the end potion of the fuel filler pipe 2, the insertion into the elastic pipe 4 becomes difficult, and therefore, it is necessary to mask the peripheral surface near the end portion of the fuel filler pipe 2 through a specified length so that the resin coating layer may not be formed.

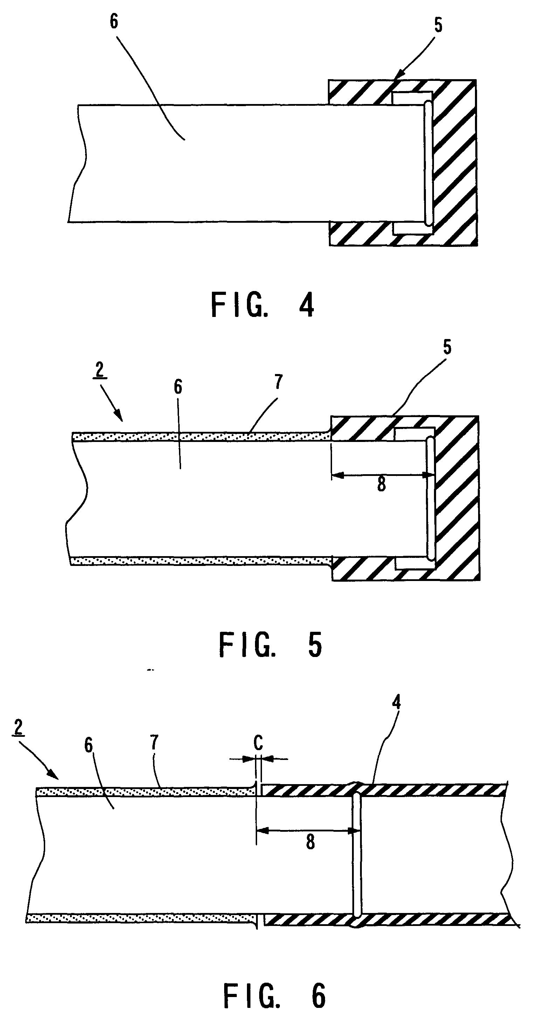

Previously, it has been arranged that first, as shown in Fig. 4, the masking member 5 formed approximately in a cylindrical shape (like a cup) from a material such as a heat resistant rubber, is fitted onto the end portion of the pipe material 6, and next, as shown in Fig. 5, a powdered resin material is attached to the rest part of the surface of the pipe material 6 and is subjected to heat treatment to form a resin coating layer 7, and finally, the masking member 5 is removed to complete the fuel filler pipe 2, and as shown in Fig. 3 and Figs. 5, 6, the portion which has been masked is inserted into the inside diameter portion of the elastic pipe 4 as an insertion portion 8.

However, after the insertion portion 8 of the fuel filler pipe 2 has been inserted into the inside diameter portion of the elastic pipe 4, it often occurs that the elastic pipe 4 is a little shifted in the direction of slipping off from the insertion portion 8 under the influence of the contraction phenomenon of the elastic pipe 4 itself, the running vibration of the vehicle, or the like, and consequently, as shown in Fig. 6, between the end portion of the resin coating layer 7 and the elastic pipe 4, a clearance C is produced. At this portion of the clearance C, the insertion portion 8 where the resin coating layer 7 is not formed (skin of the pipe material 6) is exposed to the outside, and further, water can easily enter into the clearance C, and consequently, the possibility that the fuel filler pipe 2 may suffer corrosion from the portion of the clearance C, has been high.

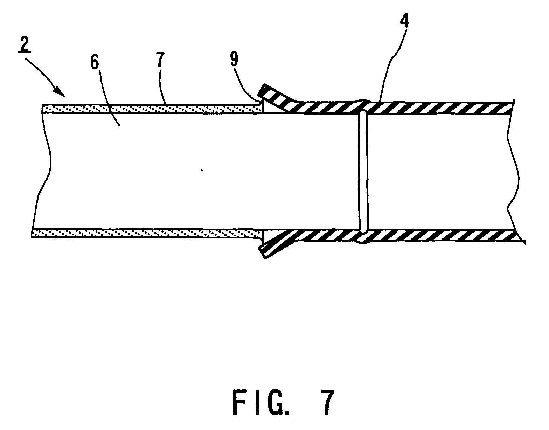

In order to prevent the occurrence of such a corrosion, as shown in Fig. 7, the insertion portion 8 should be inserted into the elastic pipe 4 deeply until the end portion of the elastic pipe 4 overlaps with (runs onto) the end portion of the resin coating layer 7, but at the end potion of the resin coating layer 7, a collar-like burr 9 may easily be produced, and not only it is extremely difficult to overlap the elastic pipe 4 onto this burr 9, but also the corrosion because of the entering of water cannot completely be prevented since the end portion of the elastic pipe 4 is raised from the insertion portion 8 by the burr 9.

The burr 9 is formed in such a way that when the powdered resin material is melted to form the resin coating layer 7, the melted and liquefied resin material is raised gradually along the end surface of the masking member 5 by the surface tension.

### SUMMARY OF THE INVENTION

The present invention is made to solve this problem, and the object of the invention is to provide a resin coating pipe and manufacturing method thereof which can prevent the occurrence of corrosion from the insertion portion, by preventing the occurrence of burrs at the end portion of the resin coating layer, and by making it possible to insert the insertion portion deeply until another fitting member overlaps the resin coating layer when inserting the insertion portion into the inside diameter portion of another fitting member, and also to provide a fuel tank having a high durability and reliability against the corrosion at the insertion portion of the fuel filler pipe.

This object can be achieved according to the present invention by providing a resin coating pipe wherein a peripheral surface near an end portion of a pipe material is masked through a specified length, and a resin coating layer is formed on a rest portion of a surface of the pipe material, and the masked portion is made to be an insertion portion to be inserted tightly into an inside diameter portion of another fitting member, said resin coating layer has its end portion being melted, and at that portion, a resin connecting portion extending along the insertion portion and capable of being fitted into an inside diameter portion of another fitting member together with the insertion portion, is formed.

According to the resin coating pipe described above, when the insertion portion of the resin coating pipe is inserted into the inside diameter portion of another fitting member, the resin connecting portion formed to the end portion of the resin coating layer is fitted into the inside diameter portion of another fitting member together with the insertion portion, and consequently, another fitting member overlaps the resin connecting portion. Therefore, even if another fitting member moves a little in the direction of slipping off from the insertion portion of the resin coating pipe, the insertion portion on which the resin coating layer is not formed, is not exposed to the outside, and consequently, the occurrence of corrosion in the insertion portion may be prevented.

Furthermore, the object of the invention can be achieved by providing a manufacturing method of a resin coating pipe which comprises a masking step to fit a masking member onto an end portion of a pipe material, said masking member is formed approximately in a cylindrical shape, a pre-coating step to attach a powderd resin material onto a rest portion of a surface of the pipe material, a sliding step to slide the masking member in a direction of being separated from the resin material, and a melting step to heat the pipe material so as to melt the resin material and form a resin coating layer with a resin connecting portion, and the masked portion is made to be the insertion portion to be tightly inserted into the inside diameter portion of another fitting member together with the resin connecting portion.

According to the manufacturing method of a resin coating pipe mentioned above, when the pipe material is heated and the resin material is melted, it does not occur that at the end portion of the resin material, the liquefied resin material rises gradually along the end surface of the masking member by the surface tension, and in reverse, by the surface tension, the coating thickness of the liquefied resin material is made thinner smoothly toward the end portion side of the pipe material, and a resin connecting portion is formed, and consequently, the occurrence of burrs at the end portion of the resin coating layer is prevented, and the resin connecting portion can be formed uniformly through the whole circumference of the end portion of the resin coating layer.

Moreover, the object of the invention can be achieved by providing a fuel tank with resin coating pipe comprising a resin coating pipe of this invention as a fuel filler pipe.

According to the fuel tank with a resin coating pipe described above, since a resin coating pipe with a high corrosion resistance at the pipe connecting portion is applied as a fuel filler pipe, the durability and the reliability of the whole fuel tank are improved.

### BRIEF DESCRIPTION OF THE DRAWINGS

A preferred embodiment of the present invention will be made more clear through the following descriptions with reference to the accompanying drawings, in which:
Figs. 1A to 1D shows an embodiment of the present invention, and 1A is a figure showing the masking step, 1B is a figure showing the pre-coating step, 1C is a figure showing the sliding step, and 1D is a figure showing the melting step;
Fig. 2A is a figure showing the state where the insertion portion of the fuel filler pipe is inserted into the elastic pipe;
Fig. 3 is an perspective view showing a fuel tank and a fuel filler pipe of an automobile.

### DETAILED DESCRIPTION OF THE PREFERRED EMBODIMENTS

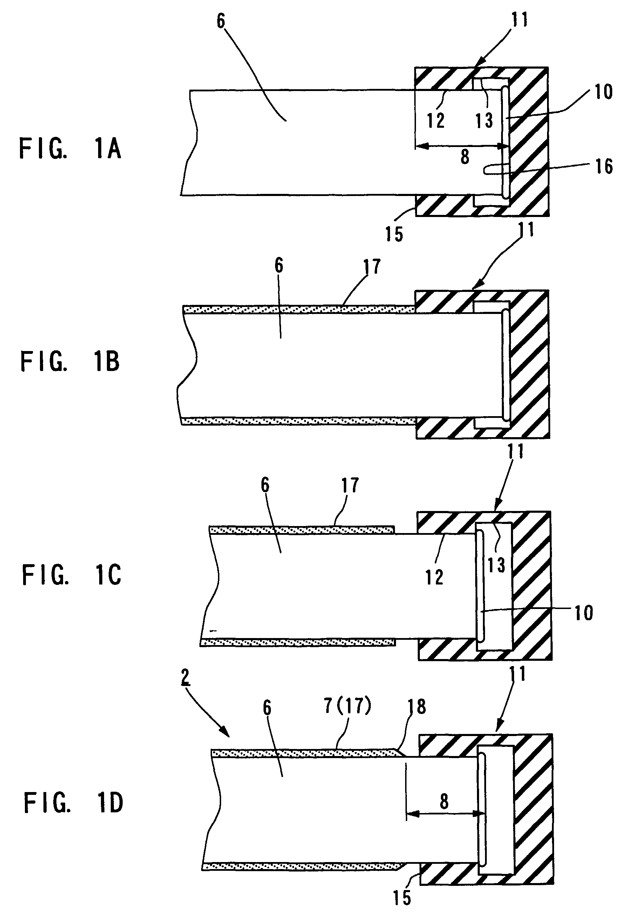

One preferred embodiment of the present invention will be described below by referring to the drawings. Figs. 1A to 1D show an embodiment of the manufacturing method of a resin coating pipe according to the present invention, for providing an insertion portion 8 where a resin coating layer 7 is not formed, at the end portion of a fuel filler pipe 2 while forming the resin coating layer 7 on the surface of the fuel filler pipe 2 shown in Fig. 3.

As a material of the fuel filler pipe 2, similarly to that in prior art, a pipe material 6 in which a surface treatment such as plating or cationic electro deposition coating is performed onto the surface of a cheap steel pipe material with a good processability, is used. Furthermore, at the end portion of the pipe material 6, a slip-off stop portion 10 whose outside diameter is expanded like a ring, has previously been formed.

The masking member 11 for forming an insertion portion 8 by masking the peripheral surface near the end portion of the pipe material 6 through a specified length, is formed approximately in a cylindrical shape (for example, like a cup) by using a material such as a heat resistant rubber. In the inside diameter portion of the masking member 11, a press fit portion 12 and a recess portion 13 are formed in order from the entrance side, and the inside diameter of the press fit portion 12 is made to be such a size that the pipe material 6 can lightly be fitted by pressurizing, and the inside diameter of the recess portion 13 is enlarged so that the slip-off stop portion 10 at the end portion of the pipe material 6 may be free.

The length of the insertion portion 8 formed at the end portion of the pipe material 6 is determined by the depth of the masking member 11, that is, the length from the end surface 15 to the bottom surface 16 of the masking member 11. Furthermore, the length in the axial direction of the recess portion 13 must be sufficiently longer than the length of the slip-off stop portion 10 of the pipe material 6, but in a case where the slip-off stop portion 10 is not provided to the pipe material 6, it is possible that the recess portion 13 is omitted and the press fit portion 12 is formed longer by the corresponding length.

In order to form the resin coating layer 7 on the surface of the pipe material 6, first, as a masking step shown in Fig. 1A, the masking member 11 is fitted onto the end portion of the pipe material 6. At this moment, the insertion is performed until the end portion of the pipe material 6 touches the bottom surface 16 of the masking member 11.

Next, as a pre-coating step shown in Fig. 1B, onto the rest portion of the surface of the pipe material 6, a powdered resin material (polyethylene or the like) 17 is attached. As the attaching method of the resin material 17, as mentioned above, such a method that a resin material 17 is electrostatically attached onto the surface of the pipe material 6, or such a method that a resin material 17 is sprinkled attached onto a previously heated pipe material 6, is adopted.

When the attachment work of the resin material 17 has been finished, next, as a sliding step shown in Fig. 1C, the masking member 11 is slided in the direction of being separated from the attached resin material 17. The sliding amount at this moment should be such an amount that the slip-off stop portion 10 of the pipe material 6 moves from one end of the recess portion 13 of the masking member 11 to the other end (1 to 2 cm), and it is also possible to completely pull out the masking member 11 from the pipe material 6.

Finally, as a melting step shown in Fig. 1D, the pipe material 6 is heated to melt the resin material 17, and the resin material 17 is fixed onto the surface of the pipe material 6 and is hardened, and consequently, the resin coating layer 7 is formed. While the resin material 17 is melted, since the masking member 11 is separated from the end portion of the resin material 17, it does not occur that at the end portion of the resin material 17, the liquefied resin material rises gradually along the end surface 15 of the masking member 11 by the surface tension, and in reverse, by the surface tension, the coating thickness of the liquefied resin material 17 becomes thinner smoothly toward the end portion side of the pipe material 6.

Therefore, at the end portion of the resin coating layer 7, a resin connecting portion 18 extending along the insertion portion 8 is formed. At the time of sliding the masking member 11, a part of the resin material 17 is separated while attaching to the end surface 15 of the masking member 11, and the angle at the end portion of the resin material 17 is rounded off, and consequently, the sloping shape of the resin connecting portion 18 can easily be formed.

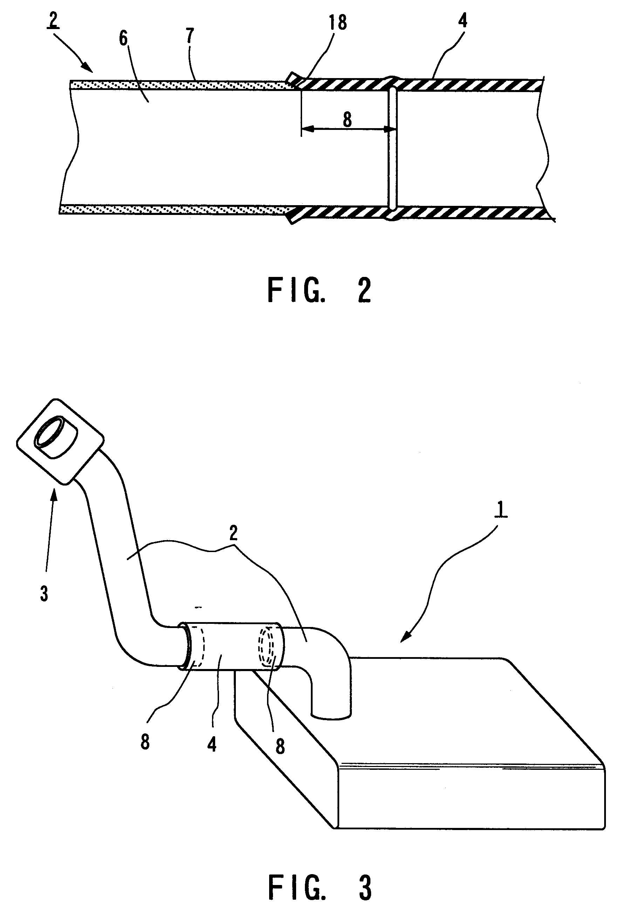

Then, when the resin coating layer 7 is cooled and hardened, the fuel filler pipe 2 as a resin coating pipe is completed, and as shown in Fig. 2, the insertion portion 8 thereof is inserted into the inside diameter portion of the elastic pipe 4. In this fuel filler pipe 2, at the end portion of the resin coating layer 7, a resin connecting portion 18 whose coating thickness smoothly grows thinner toward the end portion side of the pipe material 6, is formed by melting, and therefore, the insertion portion 8 can be inserted deeply until the elastic pipe 4 overlaps the resin connecting portion 18, when the insertion portion 8 is inserted into the inside diameter portion of the elastic pipe 4.

Accordingly, even if the elastic pipe 4 is somewhat shifted in the direction of slipping off from the insertion portion 8 of the fuel filler pipe 2 under the influence of the contraction of the elastic pipe 4 itself, the running vibration of the vehicle or the like, the insertion portion 8 on which the resin coating layer 7 is not formed, is not exposed to the outside, and consequently, the occurrence of corrosion from the insertion portion 8 is completely prevented.

The resin connecting portion 18 is formed by melting during the heating of the resin material, by sliding the masking member 11 in the direction of being separated from the powdered resin material 17 before the resin material 17 is melted by heating, and therefore, while the occurrence of burrs at the end portion of the completed resin coating layer 7 is prevented, the resin connecting portion 18 is uniformly formed through the whole circumference of the end portion of the resin coating layer 7, and the insertion portion 8 can be inserted deeply into the inside diameter portion of the elastic pipe 4, and the occurrence of corrosion from the insertion portion 8 can be stopped.

Furthermore, it is not always necessary that as shown in the present embodiment, the coating thickness of the resin connecting portion 18 is made to be smoothly thinner toward the end portion side of the pipe material 6, and for example, it is also possible that the resin connecting portion 18 is formed merely like a cylinder whose coating thickness is thinner than that of the resin coating layer 7. In short, there is no problem if the resin connecting portion 18 is shaped so that it can be fitted into (overlap) the inside diameter portion of the elastic pipe 4 together with the insertion portion 8.

By the way, the material of the masking member 11 is not limited to a heat resistant rubber. Another material is also available, if it is a material which has a certain heat resistance and a certain resistance to intermittent periodic duty, and to which the melted resin material cannot easily be adhered. Furthermore, if a grease, a mold-releasing agent, or the like is applied onto the masking member 11, the adhesion of the resin material can effectively be prevented.

## Claims

1. A resin coating pipe, wherein a peripheral surface near an end portion of a pipe material is masked through a specified length, and a resin coating layer is formed on a rest portion of a surface of the pipe material, and the masked portion is made to be an insertion portion to be inserted tightly into an inside diameter portion of another fitting member, said resin coating layer has its end portion being melted, and at that portion, a resin connecting portion extending along the insertion portion and capable of being fitted into an inside diameter portion of another fitting member together with the insertion portion, is formed.

2. A manufacturing method of a resin coating pipe which comprises:
a masking step to fit a masking member onto an end portion of a pipe material, said masking member is formed approximately in a cylindrical shape;
a pre-coating step to attach a powderd resin material onto a rest portion of a surface of the pipe material;
a sliding step to slide the masking member in a direction of being separated from the resin material; and
a melting step to heat the pipe material so as to melt the resin material and form a resin coating layer with a resin connecting portion, and the masked portion is made to be the insertion portion to be tightly inserted into the inside diameter portion of another fitting member together with the resin connecting portion.

3. A fuel tank with resin coating pipe comprising a resin coating pipe described in claim 1 as a fuel filler pipe.
